# EUROPEAN PATENT SPECIFICATION

(11) **EP 0 371 695 B1**
(45) Date of publication and mention of the grant of the patent: **01.02.1995**
(21) Application number: 89312169.9
(22) Date of filing: 23.11.1989
(51) Int. Cl.: G02F 1/1333, G02F 1/21

(54) **Liquid crystal device for providing a spatial light modulator for modulating a laser beam**
Flüssigkristall-Vorrichtung als räumlicher Lichtmodulator zur Modulation eines Laserstrahles
Dispositif à cristal liquide utilisé comme modulateur spatial de lumière pour la modulation d'un faisceau laser

(30) Priority: 29.11.1988 JP 302020/88
(43) Date of publication of application: 06.06.1990
(73) Proprietor: SEIKO INSTRUMENTS INC., Tokyo 136 (JP)
(72) Inventor: Iwaki, Tadao c/o SEIKO INSTRUMENTS INC., Tokyo (JP); Kuroda, Hiroshi c/o SEIKO INSTRUMENTS INC., Tokyo (JP); Yamanaka, Junko c/o SEIKO INSTRUMENTS INC., Tokyo (JP)
(74) Representative: Sturt, Clifford Mark

(56) References cited:
- EP-A- 0 260 073
- DE-A- 3 148 427
- US-A- 4 448 491
- SOVIET PHYSICS DOKLADY, vol. 31, no. 4, April 1986, pages 319-321; Y.D.DUMAREVSKII et al.: "Optical control of the spatial modulation of light in aliquid-crystal interferometer"

## Description

The present invention relates to a liquid crystal device for providing a spatial light modulator for modulating a laser beam.

Liquid crystal devices capable of electrically modulating a laser beam have often been used experimentally as liquid crystal displays in liquid crystal televisions.

However, the resolution offered by any of the conventional liquid crystal devices, which have been tried, remains as low as 2ℓp/mm to 2.5 ℓp/mm. Consequently, such conventional liquid crystal devices have failed to satisfy conditions, including a resolution of 10 ℓp/mm to 100 ℓp/mm, necessary for optical data processing. Moreover, the contrast ratio is as low as 1/5 to 1/20, which does not meet the requirements, including a contrast ratio of 1/100 to 1/1000, necessary for optical data processing. In the case of a conventional liquid crystal device, when analog optical data processing is performed, the wave front distortion after laser beam modulation becomes greater as a result of the inferior flatness of the substrate. Consequently, the wave front needs correcting, using matching oil, a phase conjugate wave or the like.

Document EP-A-0260073 discloses a liquid crystal device comprising transparent substrates, electrode structures, alignment layers and dielectric multi-layer film mirrors. Document US-A-4448491 discloses a liquid crystal device comprising transparent substrates, electrode structures and a plurality of insulators which act to maintain the thickness of the liquid crystal layer.

According to the present invention, there is provided a liquid crystal device comprising a first transparent substrate, which has a flatness of 0.05 micro-meters or less, having formed thereon a first dielectric multi-layer film mirror, a first electrode structure and a first alignment layer; a second transparent substrate, which has a flatness of 0.05 micro-meters or less having formed thereon a second dielectric multi-layer film mirror, a second electrode structure, and a second alignment layer; a liquid crystal layer between the first and second substrates; and gap control means for ensuring a uniform gap between the substrates with the gap control means comprising a plurality of insulating films having a thickness in the range of 1.5 micro-meters to 6.0 micro-meters formed on the inward facing side of the first transparent substrate and/or the second transparent substrate.

The present invention as described below provides a liquid crystal device having a high contrast necessary for optical data processing.

The liquid crystal device as described also meets the requirements of a high resolution necessary for optical data processing.

Further, when the described liquid crystal device is utilised as a spatial light modulator, the wave front distortion is extremely low after light modulation.

The preferred liquid crystal device has a pair of glass substrates having a flatness of 0.05 micro-meters and less, dielectric multi-layer film mirrors having a reflectivity of fifty percent and over, a plurality of transparent electrodes arranged in a matrix, a plurality of metal electrodes connecting rows and columns respectively of the transparent electrodes a pair of alignment layers, insulating films, and a liquid crystal layer.

As a result of the glass substrates having a flatness of 0.05 micro-meters and less, the contrast of the liquid crystal device becomes even in the display area.

In the preferred embodiment, the dielectric multi-layer film mirrors are formed on the inner faces of the glass substrates so as to constitute a Fabry-Perot etalon via the liquid crystal layer and so as to enhance the contrast ratio. The metal electrodes efficiently supply each of the transparent electrodes with electric signals, and each of the transparent electrodes has a junction electrode and a picture element electrode, so that the electric signal is efficiently applied to the liquid crystal material of the picture element, and the liquid crystal device attains a high resolution. The insulating films are arranged in a matrix to provide a uniform gap between the glass substrates.

The invention is described further, by way of example, with reference to the accompanying drawings, in which:-
Figure 1 is a diagrammatic sectional view of an electrode structure of a liquid crystal device according to the present invention;
Figure 2 is a top view of the electrode structure of the liquid crystal device;
Figure 3 is a diagrammatic view of the overall liquid crystal device;
Figure 4 is a graph showing the relation between the driving voltage and the transmissivity of the liquid crystal device;
Figure 5 is a graph illustrating the resolution characteristics of the liquid crystal device; and
Figure 6 is a graph illustrating the relation between the reflectivity of a dielectric multi-layer film mirror and the contrast ratio of the liquid crystal device.

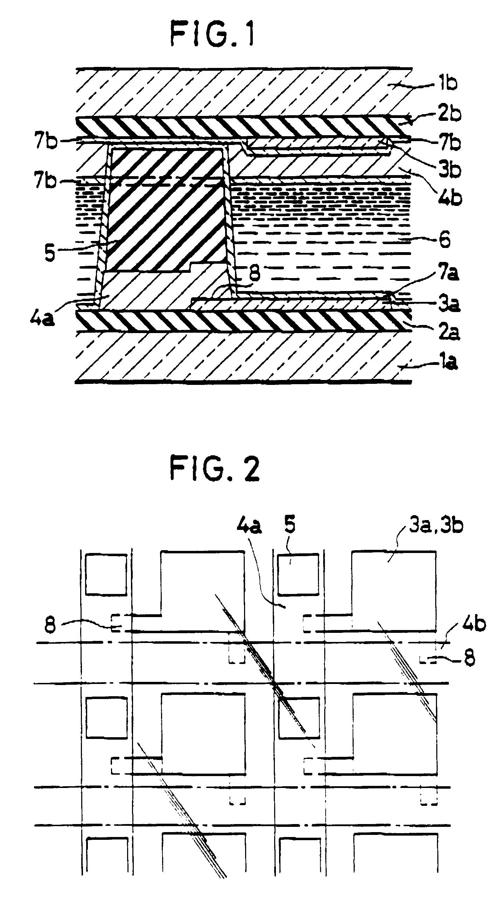

Figure 1 and Figure 2 show an electrode structure of a liquid crystal device embodying the present invention. The liquid crystal device is formed by injecting a liquid crystal material 6 between glass substrates 1a, 1b which carry opposed transparent electrodes 3a, 3b.

More especially, the glass substrate 1b has formed sequentially on its inner face a dielectric multi-layer film mirror 2b, the transparent electrodes 3b, metal electrodes 4b, and an SiO film 7b. The glass substrate 1a has formed sequentially on its inner face a dielectric multi-layer film mirror 2a, transparent electrodes 3a, metal electrodes 4a, insulating films 5 and an SiO film 7a.

The transparent electrodes 3a, 3b are arranged in a matrix, and each pair of the transparent electrodes 3a, 3b has associated therewith a junction electrode 8 and a picture element electrode.

The metal electrodes 4a are arranged in parallel, and each of the metal electrodes 4a is connected to a column of the transparent electrodes 3a through the junction electrodes 8. The metal electrodes 4b are also arranged in parallel, and each of the metal electrodes 4b is connected to a row of the transparent electrodes 3b through the junction electrodes 8. The metal electrodes 4a, 4b intersect at right angles as illustrated in Figure 2.

The insulating films 5 are arranged in a matrix on the metal electrodes 4a on the glass substrate 1a, and control the spacing between the glass substrates 1a, 1b.

The glass substrates 1a, 1b may be made of an ordinary glass, such as soda glass and borosilicate glass, an optical glass, such as flint glass and crown glass, or a quartz glass. An optical glass known as BK7 is used in this embodiment. The flatness of the glass substrate is set to have a variation not greater than 0.05 micro-metres within a data display area. When the flatness variation of the glass substrate was made greater than 0.05 micro-metres in visible light, the contrast of the liquid crystal device according to the present invention was seen to become conspicuously uneven. A flatness variation of not greater than 0.05 micro-metres is therefore preferred. However, when the wavelength of the light for use in optical data processing is relatively long, as in the case of near infra-red light, the unevenness in contrast tends to be reduced even if the value of the flatness variation is as great as approximately 0.1 micro-metres.

Each of the dielectric multi-layer film mirrors 2a, 2b is prepared by the alternate formation by vacuum deposition of two or three kinds of dielectric thin films having different refractive indexes. An [HL]_{N}L/glass substrate had a well known dielectric multi-layer film mirror structure, where H is a λ/4 film of high refractive material, L is a λ/4 film of low refractive material, λ is the wavelength of a laser beam to be used, and N is an integer not smaller than 4. [HL]_{N} in this case means the [HL] structure is repeated N times. In the embodiment shown, TiO₂ is used as the film H and SiO₂ as the film L with 5 ≦ N ≦ 10 and λ = 488 nm. However, ZnS, ZrO₂, Y₂O₃, SiO, Si, etc. may be used as the film H in place of TiO₂, whereas MgF₂, cryolite, etc. may be used as the film L in place of SiO₂. The transparent electrodes 3a, 3b, which are ITO electrodes as thick as approximately 1200 Angstroms, are formed by vacuum deposition. However, sputtering may be used for the formation of the ITO electrodes. Moreover, any value ranging from 200 Angstroms to 2000 Angstroms may optionally be selected as the film thickness of the ITO electrodes, providing this gives desired electrical characteristics, although this is dependent on the film forming conditions.

The metal electrodes 4a, 4b, which have a thickness of 1800 Angstroms to 2500 Angstons are formed by sputtering Mo, Cr, Al, Cu, W, Au/Cr, etc., the electrode width being set at 5 micro-metres to 10 micro-metres.

The insulating films 5, which have a thickness of 1.5 micro-metres to 6.0 micro-metres, are formed by sputtering SiNx (x = 0.8 to 1.3), Ta₂O₅ or SiO₂ on one of the metal electrodes 4a, 4b.

The SiO films 7a, 7b serve as layers to align the molecules of the liquid crystal material 6, and are formed by oblique deposition in a direction parallel to the associated metal electrode and in a direction at an angle of 58° to 64° relative to the normal of the associated substrate.

A TN liquid crystal material is employed in this embodiment, although a ferro-electric liquid crystal material may also be used.

The insulating films 5 are formed by physical vapour deposition, (i.e. sputtering, vapour deposition ion plating), so that the thickness of the insulating films 5 becomes the same over the whole substrate. In the case of the liquid crystal device having a minute gap of 1.5 micro-metres to 6.0 micro-metres, formation of the insulating films by physical vapour deposition is important to make a uniform gap. Although there are as many of the insulating films 5 as there are pairs of the transparent electrodes 3a, 3b in Figure 2, it is rather preferred to provide fewer of the insulating films than the pairs of transparent electrodes. The insulating films 5 are preferably disposed with a pattern spacing of 100 micro-metres to 1000 micro-metres. The trains of the metal electrodes 4a, 4b formed on both glass substrates 1a, 1b should intersect at right angles, so that the positioning of the electrodes is facilitated and the liquid crystal device, including lead out electrode sections, is made compact. The dimensions of the insulating films 5 are (5 micro-metres to 10 micro-metres) x (5 micro-metres to 10 micro-metres).

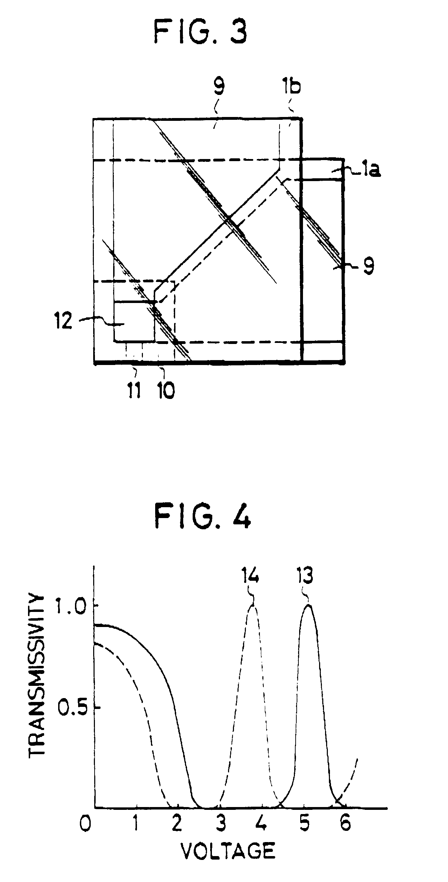

Figure 3 is a diagram of the overall liquid crystal device comprising lead out electrode sections 9, a liquid crystal sealing section 10, a liquid crystal material injection opening 11 and a display area 12.

The liquid crystal sealing section 10 is filled with an epoxy adhesive in order to fix the glass substrates 1a, 1b with their respective electrode sections set opposite to each other. The liquid crystal injection opening 11 is used to inject the liquid crystal material into the display area 12, and is sealed with epoxy resin after the liquid crystal material has been injected. The display area 12 is provided with the electrode structure shown in Figures 1 and 2. The lead out electrode sections 9 are provided for supplying the metal electrodes 4a, 4b with a driving voltage for the liquid crystal material. The gap between electrodes in the lead out electrode sections 9 is increased to 200 micro-metres to 1000 micro-metres, because the gap between the electrodes in the display area 12 may be as little as 10 micro-metres to 20 micro-metres, which is too small for the connection of an external signal line.

The operational characteristics of the liquid crystal device according to the present invention will be described below.

Figure 4 is a graph showing the relation between the driving voltage and transmissivity of the liquid crystal device according to the present invention. Curves 13 and 14 represent the characteristics when the thickness of the insulating films 5 is set at 1.5 micro-metres and 2.5 micro-metres, respectively. The transmissivity represented in Figure 4 is measured using an argon laser beam having a wavelength of 488 nm. The liquid crystal device according to the present invention is seen to have characteristics far different from those of a conventional liquid crystal device, and its transmissivity is also seen to have a sharp peak in relation to a particular driving voltage. Moreover, the position of such a peak varies with the thickness of the insulating films 5, and varies slightly also with the assembly conditions for the liquid crystal device even when the thickness of the insulating films is the same. Further, the peak position varies with the wavelength of the light used. In the liquid crystal device according to the present invention, the operational driving voltage range is determined when the liquid crystal device characteristics have been evaluated one after another. The liquid crystal device having the characteristics represented by the curve 13 of Figure 4, for instance, is driven by applying a driving voltage of 3.5 V while it is held on and 5.2 V while it is held off. The contrast ratio of the liquid crystal device thus obtained is a value as high at 1:150 to 1:1800.

In the case where a ferro-electric liquid crystal material is used as the liquid crystal material, the SiO films 7a, 7b are formed by oblique deposition in a direction at an angle of 80° relative to the normal of the associated substrate, and the insulating films 5 are formed by sputtering SiO₂ to a thickness of 2.0 micro-metres. As a result, the liquid crystal device attains a contrast ratio of 1:300 to 1:2000.

The ferro-electric liquid crystal material may be composed of a mixture of ester type SmC liquid crystal materials with an optically active material added. For example, the mixture may comprise 4-((4′-octyl) phenyl) benzoic acid (3˝-fluoro, 4˝-octyloxy) phenyl ester: 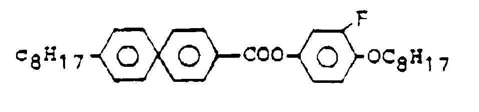
and 4-((4′-octyloxy) phenyl) benzoic acid (3˝-fluoro, 4˝-octyloxy) phenyl ester: 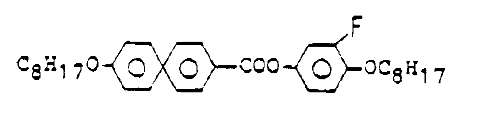
at a ratio of 1:1. The optically active material may comprise 5-octyloxynaphthalene carboxylic acid 1′-cyanoethyl ester: 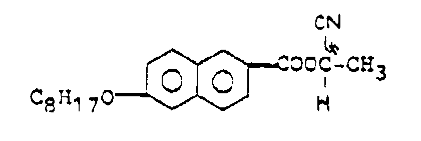
which is added to the above mixture by a weight of 25% to form the ferro-electric liquid crystal composition.

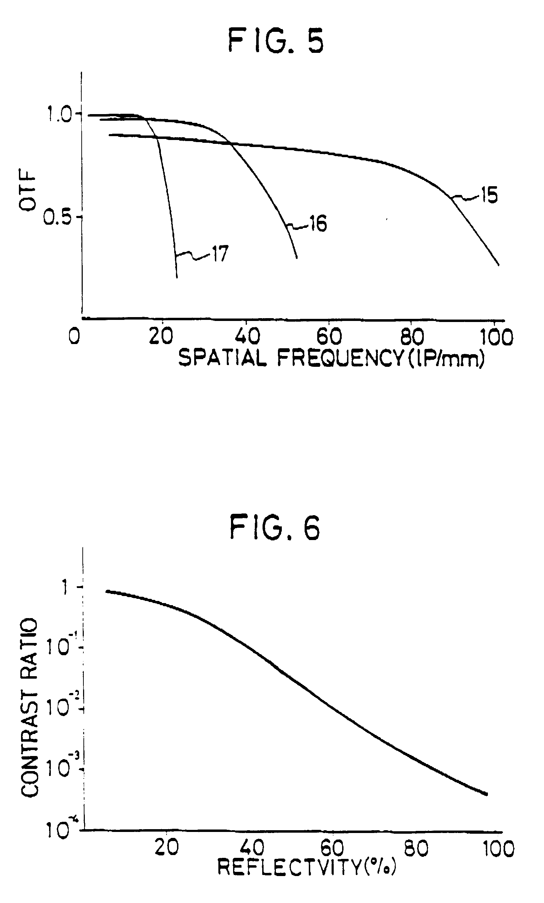

The resolution of the liquid crystal device according to the present invention will be described below. The resolution was evaluated by feeding a resolution test chart to the liquid crystal device and evaluating the OTF (optical transfer function). Figure 5 is a graph illustrating the resolution characteristics of the liquid crystal device according to the present invention, wherein the spatial frequency of the resolution test chart is indicated on the abscissa and the OTF is indicated on the ordinate. In Figure 5, the curves 15, 16 and 17 represent the characteristics when transparent electrodes sized 5 micro-metres x 5 micro-metres, 10 micro-metres x 10 micro-metres and 20 micro-metres x 20 micro-metres are used, respectively. Incidentally, the wavelength of the light used for the evaluation of the resolution was 488 nm. As shown in Figure 5, the resolution of the liquid crystal device according to the present invention increases sharply as the size of the transparent electrodes is made smaller. Moreover, the good contrast ratio of the liquid crystal device prevents the OTF from decreasing drastically even when the size of the transparent electrode is decreased. In this way, the liquid crystal device according to the present invention is seen to have a resolution of 20 ℓp/mm to 100 ℓp/mm.

A description will now be given of the relation between the flatness of the glass substrate used for the liquid crystal device according to the present invention and the wave front distortion. Since the liquid crystal device is generally designed as a spatial light modulator for use in controlling the wave front of optical data very often having good coherence, distortion of the wave front of the light passing through the liquid crystal spatial light modulator has to be removed as it greatly impairs the performance of the optical operations. Differences between images using the liquid crystal device according to the present invention were calculated. As a result, it was found that the flatness variation of each glass substrate had to be not greater than 0.05 micro-metres in order to carry out uniform calculation of the differences over the whole display area of the liquid crystal device.

Although light having a wavelength of 488 nm was employed for the evaluation of the flatness of the glass substrate, the flatness of a glass substrate may have an inferior value when a laser beam source such as an He-Ne laser, a YAG laser or a semi-conductor laser having a wavelength longer than 488 nm is employed. Although the flatness of the glass substrate was expected to affect the unevenness of contrast in the liquid crystal device, almost no unevenness of contrast was found when the flatness of the glass substrate varied by no more than 0.05 micro-metres.

An aperture ratio of the liquid crystal device will now be described. Since the liquid crystal device according to the present invention uses metal electrodes, its aperture ratio tends to become low so that it is apt to provide an extremely dim liquid crystal spatial light modulator. However, the aperture ratio may be rendered as large as 45% to 60% by making the linear width of the electrodes 5 micro-metres to 10 micro-metres, which gives a similar aperture ratio by comparison with that of a conventional liquid crystal device.

Figure 6 is a graph illustrating the relation between the reflectivity and the contrast ratio of the dielectric multi-layer film mirrors used in the liquid crystal device according to the present invention. As is obvious from Figure 6, the contrast ratio is seen to improve sharply when the reflectivity of the dielectric multi-layer film mirror exceeds approximately 60% and proves satisfactorily usable when the reflectivity is over 50%.

As described above, the liquid crystal device according to the present invention exhibits a resolution of 10 ℓp/mm to 100 ℓp/mm at a contrast ratio of 1:100 to 1:1000, and the liquid crystal spatial optical modulator shows minimum wave front distortion after laser beam modulation, whereby it proves very effective in processing optical data such as in image processing and optical computing. In particular, the liquid crystal device according to the present invention is effective in processing optical data on receiving electrical data to be processed and is effectively applicable to matched filter using Computer Generated Holograms (CGHs).

## Claims

1. A liquid crystal device comprising a first transparent substrate (1a) having formed thereon a first dielectric multi-layer film mirror (2a), a first electrode structure (3a, 4a) and a first alignment layer (7a); a second transparent substrate (1b) having formed thereon a second dielectric multi-layer film mirror (2b), a second electrode structure (3b, 4b), and a second alignment layer (7b); a liquid crystal layer (6) between the first and second substrates; and gap control means (5) for ensuring a uniform gap between the substrates (1a, 1b), characterised in that the first and second transparent substrates each have a flatness of 0.05 micro-meters or less and in that the gap control means (5) comprises a plurality of insulating films having a thickness in the range of 1.5 micro-meters to 6.0 micro-meters formed on the inward facing side of the first transparent substrate and/or the second transparent substrate.

2. A liquid crystal device according to claim 1 characterised in that each of the first and second electrode structures comprises a plurality of transparent electrodes (3a, 3b) arranged in a matrix and a plurality of elongate metal electrodes (4a, 4b).

3. A liquid crystal device according to claim 2, characterised in that each of the transparent electrodes comprises a picture element electrode and a junction electrode and each of the metal electrodes is connected to a respective matrix row or column of the picture element electrodes through the junction electrodes.

4. A liquid crystal device according to any preceding claim characterised in that the liquid crystal layer is composed of one of a ferro-electric liquid crystal composition and a TN liquid crystal composition.

## Patentansprüche

1. Flüssigkristall-Vorrichtung, umfassend ein erstes transparentes Substrat (1a), das darauf einen ersten dielektrischen Multischicht-Filmspiegel (2a), eine erste Elektrodenstruktur (3a, 4a) und eine erste Ausrichtschicht (7a) aufgebildet hat, ein zweites transparentes Substrat (1b), das darauf einen zweite dielektrischen Multischicht-Filmspiegel (2b), eine zweite Elektrodenstruktur (3b, 4b) und eine zweite Ausrichtschicht (7b) aufgebildet hat, eine Flüssigkristallschicht (6) zwischen den ersten und zweiten Substraten, und ein Spaltregulierungsmittel (5), um einen gleichmäßigen Spalt zwischen den Substraten (1a, 1b) zu gewährleisten, dadurch gekennzeichnet, daß die ersten und zweiten Substrate jeweils eine Ebenheit von 0,05 Mikrometer oder weniger aufweisen, und daß das Spaltregulierungsmittel (5) eine Vielzahl isolierende Film mit einer Dicke im Bereich von 1,5 Mikrometer bis 6,0 Mikrometer umfaßt, die auf der nach innen weisenden Seite des ersten transparenten Substrats und/oder des zweiten transparenten Substrats aufgebildet sind.

2. Flüssigkristall-Vorrichtung nach Anspruch 1, dadurch gekennzeichnet, daß jede der ersten und zweiten Elektrodenstrukturen mehrere transparente Elektroden (3a, 3b), die in einer Matrix angeordnet sind, und mehrere längliche Metallelektroden (4a, 4b) umfaßt.

3. Flüssigkristall-Vorrichtung nach Anspruch 1, dadurch gekennzeichnet, daß jede der transparenten Elektroden eine Bildelementelektrode und eine Verbindungselektrode umfaßt, und daß jede der Metallelektroden mit einer entsprechenden Matrixreihe oder -spalte der Bildelementelektroden über die Verbindungselektroden verbunden ist.

4. Flüssigkristall-Vorrichtung nach einem der vorhergehenden Ansprüche, dadurch gekennzeichnet, daß die Flüssigkristallschicht aus einer ferroelektrischen Flüssigkristallzusammensetzung oder einer TN-Flüssigkristallzusammensetzung zusammengesetzt ist.

## Revendications

1. Dispositif à cristaux liquides comprenant un premier substrat (1a) transparent sur lequel est formé un premier miroir (2a) diélectrique à pellicule en couches multiples, une première structure d'électrodes (3a,4a) et une première couche d'alignement (7a), un second substrat (1b) transparent sur lequel est formé un second miroir (2b) diélectrique à pellicule en couches multiples, une seconde structure d'électrodes (3b,4b) et une seconde couche d'alignement (7b) ; une couche à cristaux liquides entre le premier et le second substrat; et un moyen destiné à se rendre maître de l'écartement pour assurer un écartement uniforme entre les substrats (1a,1b), caractérisé en ce que les premier et second substrats ont chacun une planéité de 0,05 » mètre ou inférieure à cette valeur et en ce que le moyen destiné à se rendre maître de l'écartement (5) comprend plusieurs pellicules isolantes, d'une épaisseur variant entre 1,5 et 6 » mètre, formées sur le côté faisant face à l'intérieur du premier substrat transparent et/ou du second substrat transparent.

2. Dispositif à cristaux liquides selon la revendication 1, caractérisé en ce que chacune des première et seconde structures d'électrodes comprend plusieurs électrodes (3a,3b) transparentes disposées en une matrice et plusieurs électrodes métalliques (4a,4b) oblongues.

3. Dispositif à cristaux liquides selon la revendication 2, caractérisé en ce que chacune des électrodes transparentes comprend une électrode formant élément d'image et une électrode de raccordement et chacune des électrodes métalliques est reliée à une colonne ou à une rangée respective de matrice d'électrodes formant éléments d'images par les électrodes de raccordement.

4. Dispositif à cristaux liquides selon l'une quelconque des revendications précédentes, caractérisé en ce que la couche de cristaux liquides est constituée d'un mélange de cristaux liquides ferro-électriques et d'un mélange de cristaux liquides nématiques torsadés.
